# EUROPÄISCHE PATENTSCHRIFT

(11) **EP 2 424 750 B1**
(45) Veröffentlichungstag und Bekanntmachung des Hinweises auf die Patenterteilung: **24.04.2013**
(21) Anmeldenummer: 10721728.3
(22) Anmeldetag: 29.04.2010
(51) Int. Cl.: B60R 21/16

(54) **GASSACKMODUL ZUM SCHUTZ DES THORAX- UND KOPFBEREICHS EINES FAHRZEUGINSASSEN**
AIRBAG MODULE FOR PROTECTING THE THORAX AND HEAD AREAS OF A VEHICLE OCCUPANT
MODULE DE COUSSIN GONFLABLE POUR PROTÉGER LA RÉGION DU THORAX ET LA TÊTE D'UN OCCUPANT DE VÉHICULE

(30) Priorität: 30.04.2009 DE 102009019930
(43) Veröffentlichungstag der Anmeldung: 07.03.2012
(73) Patentinhaber: Takata AG, 63743 Aschaffenburg (DE)
(72) Erfinder: STECK, Thomas, 89275 Elchingen (DE); BAUMGARTNER, Peter, 89312 Günzburg (DE); FELLER, Jens, 89171 Illerkirchberg (DE); WINDHOLZ, Dimitri, 89231 Neu-Ulm (DE)
(74) Vertreter: Müller, Wolfram Hubertus
(86) Internationale Anmeldenummer: PCT/EP2010/055781
(87) Internationale Veröffentlichungsnummer: WO 2010/125133

(56) Entgegenhaltungen:
- EP-A2- 1 044 854
- WO-A1-00/20260
- DE-U1- 29 606 709
- US-A- 5 586 782

## Beschreibung

Die Erfindung betrifft ein Gassackmodul zum Schutz des Thorax- und Kopfbereichs eines in einem Fahrzeugsitz sitzenden, mittels eines Sicherheitsgurtes gesicherten Fahrzeuginsassen gemäß dem Oberbegriff des Anspruchs 1.

Ein gattungsgemäßes Gassackmodul ist aus dem Dokument US 5,803,485 A bekannt. Dieses sieht eine Entfaltung eines Seitengassacks derart vor, dass dieser sich beim Aufblasen anfangs überwiegend schräg nach oben und nach vorn und anschließend überwiegend schräg nach oben und nach hinten entfaltet, ohne mit einem Sicherheitsgurt zu interagieren. Die Druckschriften WO 97/01461 A1, US 6,155,598 A, WO 97/06985, DE 101 42 819 A1 und DE 102 04 486 A1 beschreiben weitere Gassackanordnungen zum Schutz des Thorax- und Kopfbereichs eines Fahrzeuginsassen, die eine Interaktion zwischen dem sich entfaltenden Gassack und einem Sicherheitsgurt des Fahrzeuginsassen zu vermeiden suchen.

Aus dem Dokument WO 2008/141889 A1 ist es bekannt, zur Befüllung eines Gassackes, der zwei Gassackkammern aufweist, einen Befüllungskanal zu verwenden, in den das aus dem Gassack im Auslösefall austretende Gas teilweise eintritt.

Aus dem Dokument EP 1 044 854 A2 ist ein Gassackmodul zum Schutz des Thorax- und Kopfbereichs eines Fahrzeuginsassen bekannt, das einen Gassack aufweist. Der Gassack wird durch mehrere Gewebelagen gebildet, wobei mittels eines Gewebeabschnitts, eine Aufteilung des Gassacks in zwei aufblasbare Kammern erfolgt, wobei dieser Gewebeabschnitt Gasdurchtrittsöffnungen aufweist.

Der vorliegenden Erfindung liegt die Aufgabe zugrunde, ein Gassackmodul zum Schutz des Thorax- und Kopfbereichs eines in einem Fahrzeug sitzenden, mittels eines Sicherheitsgurtes gesicherten Fahrzeuginsassen bereitzustellen, das das Aufblasen des Gassacks des Gassackmoduls ohne eine Interaktion mit dem Sicherheitsgurt ermöglicht.

Diese Aufgabe wird erfindungsgemäß durch ein Gassackmodul mit den Merkmalen des Anspruchs 1 gelöst. Ausgestaltungen der Erfindung sind in den Unteransprüchen angegeben.

Danach ist erfindungsgemäß ein Befüllungskanal im Gassack ausgebildet, in den das aus dem Gasgenerator im Auslösefall austretende Gas zumindest teilweise eintritt. Der Befüllungskanal verläuft im Wesentlichen schräg nach vorne und oben, so dass sich der Gassack bei Aufblasen des Befüllungskanals schräg nach vorne und oben vor dem Sicherheitsgurt entfaltet. Erst anschließend erfolgt ein Einblasen des Gases in die Kopfkammer. Damit wird sichergestellt, dass der Gassack sich zuerst schräg nach vorne und oben vor dem Sicherheitsgurt und erst anschließend oberhalb des Sicherheitsgurtes entfaltet. Der Befüllungskanal wird dabei durch zwei Gassacklagen gebildet, von denen mindestens eine eine innenliegende Gassacklage ist, die zwischen zwei äußeren Gassacklagen angeordnet ist.

Der Befüllungskanal wird in einer ersten erfindungsgemäßen Ausführungsform durch die dritte, innenliegende Gassacklage und eine der äußeren Gassacklagen gebildet. Hierzu ist beispielsweise vorgesehen, dass die dritte Gassacklage über eine erste Naht mit der einen äußeren Gassacklage und eine zu der ersten Naht beabstandete zweite Naht mit der anderen äußeren Gassacklage verbunden ist. Zusammen mit der Umfangsnaht der Gassacks wird durch die erste Naht die Befüllungskammer definiert. Die zweite Naht betrifft die Verbindung zur Thoraxkammer.

In einer zweiten, alternativen erfindungsgemäßen Ausführungsform wird der Befüllungskanal durch die dritte, innenliegende Gassacklage und eine weitere innenliegende, vierte Gassacklage, also zwei innenliegende Gassacklagen gebildet. Dabei ist die dritte Gassacklage über eine erste Naht mit der vierten Gassacklage, die dritte Gassacklage über eine zweite Naht mit der einen äußeren Gassacklage und die vierte Gassacklage über eine dritte Naht mit der anderen äußeren Gassacklage verbunden, wobei die erste Naht beabstandet zu der zweiten und dritten Naht ist.

Die erfindungsgemäße Lösung beruht auf dem Gedanken, durch einen Befüllungskanal, in den im Auslösefall das aus dem Gasgenerator austretende Gas zumindest teilweise eintritt, eine zielgerichtete und definierte Befüllung bereitzustellen und dabei insbesondere ein initiale Entfaltungsrichtung schräg nach oben und nach vorne vor dem Sicherheitsgurt zu sichern. Erst anschließend wird oberhalb des Sicherheitsgurtes die Kopfkammer befüllt, ohne dass dabei eine ungewünschte Interaktion zwischen der sich entfaltenden Kopfkammer und dem Sicherheitsgurt auftreten könnte.

Die verwendete Bezeichnung "schräg nach vorne und oben" bezieht sich auf die Situation, in der die Rückenlehne des Fahrzeugssitzes, in der das Gassackmodul typischerweise beispielsweise in einer Seitenwange angeordnet ist, senkrecht im Fahrzeug ausgerichtet ist.

Der Befüllungskanal ist über eine erste Öffnung mit der Kopfkammer verbunden. Über diese Öffnung wird Gas im Auslösefall in die Kopfkammer eingeblasen. Des Weiteren ist der Befüllungskanal in einer Ausgestaltung über eine zweite Öffnung mit der Kopfkammer verbunden ist. Über diese zweite Öffnung wird Gas im Auslösefall in die Kopfkammer geblasen. Das aus dem Gasgenerator im Auslösefall austretende Gas wird bei dieser Ausgestaltung beispielsweise über einen Gasstromverteiler vollständig in den Befüllungskanal geblasen und von dort über die Öffnungen der Kopfkammer und der Thoraxkammer zugeführt. Es kann jedoch ebenfalls vorgesehen sein, dass ein Teil des bereitgestellten Gases direkt vom Gasgenerator oder einem Gasstromverteiler in die Thoraxkammer eingelassen wird, ohne dass dieses Gas zunächst dem Befüllungskanal zugeführt würde.

Die genannten Öffnungen des Befüllungskanals zur Kopfkammer oder Thoraxkammer können als Rückschlagventil ausgebildet ist, das sich jeweils schließt, wenn der Druck in der jeweiligen Gassackkammer größer ist als der Druck im Befüllungskanal. Dies kann beispielsweise im Rückhaltefall der Fall sein, wenn ein mit dem Gassack interagierender Fahrzeuginsasse einen zusätzlichen Druck insbesondere auf die Thoraxkammer ausübt.

Wenn der Befüllungskanal durch die dritte, innenliegende Gassacklage und eine weitere innenliegende, vierte Gassacklagegebildet ist, sind die zweite Naht und die dritte Naht in einer Ausgestaltung derart ausgebildet, dass sie beim flach ausgebreiteten Gassack übereinander liegen. Damit wird innerhalb der beiden äußeren Gassacklagen, die die Kopfkammer und die Thoraxkammer bilden, mittels zweier innerer Gassacklagen der Befüllungskanal bereitgestellt.

In einer Ausgestaltung der Erfindung ist vorgesehen, dass der Befüllungskanal derart ausgebildet sind, dass beim Aufblasen des Gassacks das Gas aus dem Befüllungskanal in einer Richtung im wesentlichen schräg nach oben und vorne in die Kopfkammer eintritt. Dies bewirkt, dass auch die Kopfkammer sich zunächst schräg nach oben und vorne und erst der letzten Entfaltungsphase sich nach hinten oder schräg nach hinten und oben entfaltet.

Alternativ kann jedoch ebenso vorgesehen sein, dass der Befüllungskanal derart ausgebildet ist, dass beim Aufblasen des Gassacks das Gas aus dem Befüllungskanal in einer Richtung im Wesentlichen schräg nach hinten und oben in die Kopfkammer eintritt. Da der Gassack sich bereits vor dem Sicherheitsgurt nach oben und vorne entfaltet hat und vor Entfalten der Kopfkammer eine Position oberhalb des Sicherheitsgurtes erreicht hat, kommt es im Weiteren nicht darauf an, in welcher Reihenfolge die noch zu erfolgende Befüllung der Kopfkammer erfolgt. Beispielsweise ist der Befüllungskanal angrenzend an die Kopfkammer nach hinten gekrümmt, so dass Gas mit einer nach hinten gerichteten Komponente in die Kopfkammer eingeblasen wird. Dabei wird der hintere Bereich der Kopfkammer zuerst mit Gas befüllt. Dies hat den Vorteil, dass der nach hinten geführte Gasjet den hinteren Teil der Kopfkammer oberhalb des Gurtes sicher und gerichtet zwischen Kopf und eindringende B-Säule treibt. Erst danach befüllt sich der vordere Bereich der Kopfkammer. Diese Variante ist beispielsweise vorteilhaft bei engen Platzverhältnissen bzw. rasch fortschreitender Intrusion.

In einer weiteren Ausgestaltung ist vorgesehen, dass der Gassack derart ausgebildet ist, dass er sich anfänglich, vor einer Entfaltung schräg nach vorne und oben, im wesentlichen senkrecht nach oben entfaltet. Die Gassackentfaltung erfolgt somit initial im wesentlichen senkrecht nach oben, dann aufgrund der Ausrichtung des Befüllungskanals schräg nach vorne und oben, und schließlich oberhalb des Sicherheitsgurtes.

In einer weiteren Ausgestaltung der Erfindung sind Mittel vorgesehen, die ein Überströmen von Gas von der Thoraxkammer in die Kopfkammer bereitstellen, wenn der Druck in der Thoraxkammer größer ist als der Druck in der Befüllungskammer. Dies ermöglicht es, den Druck in der Kopfkammer auch nach der Gassackentfaltung möglichst lange aufrecht zu erhalten, und damit einen sicheren Kopfschutz bereitzustellen.

Die genannten Mittel sind in einer Ausgestaltung durch mindestens eine Ausströmöffnung gebildet, die die Thoraxkammer und die Kopfkammer verbindet, wobei die Ausströmöffnung zwischen dem Befüllungskanal und einer der äußeren Gassacklagen verläuft. Wenn der Druck in der Thoraxkammer sich insbesondere im Rückhaltefall durch Interaktion mit dem rückzuhaltenden Fahrzeuginsassen erhöht, wird der Befüllungskanal zusammengedrückt mit der Folge, dass die Ausströmöffnung und damit der Verbindung zwischen der Thoraxkammer und der Kopfkammer freigegeben wird. Wenn der Druck in der Thoraxkammer kleiner ist als der Druck im Befüllungskanal, insbesondere also bei der Entfaltung des Gassacks, ist die Ausströmöffnung zusammengedrückt.

Der Gassack weist in einer Ausgestaltung unterhalb der Kopfkammer die geringste Ausdehnung nach hinten auf. Insbesondere kann vorgesehen sein, dass der aufgeblasene Gassack unterhalb der Kopfkammer auf seiner bezogen auf die Fahrzeuglängsrichtung hinteren Seite eine Einbuchtung aufweist. In diesem Bereich verläuft benachbart zu dem aufgeblasenen Gassack der Sicherheitsgurt. Die geringe Breite des Gassacks in diesem Bereich stellt sicher, dass der Sicherheitsgurt die Entfaltung des Gassacks nicht behindert.

Weiter ist in einer Ausgestaltung vorgesehen, dass die aufgeblasene Kopfkammer des Gassacks in der Seitenansicht eine ovale Form aufweist. Oberhalb des Gurtes, im Bereich der Kopfkammer, weist der Gassack somit eine sich nach hinten erstreckende und nach hinten verlängerte Geometrie auf. Die nach hinten verlängerte Geometrie positioniert sich beim Aufblasen beispielsweise vor dem Gurtumlenker oder einem r anderen harten Struktur der Seitenstruktur des Fahrzeugs.

Die Gassacklagen sind beispielsweise durch Gewebelagen gebildet, können grundsätzlich jedoch auch aus einem anderen Material, z.B. einer Folie bestehen.

Die Erfindung betrifft auch einen Fahrzeugsitz mit einem erfindungsgemäßen Gassackmodul, wobei der Gassack derart ausgebildet und in einer Sitzlehne des Fahrzeugsitzes angeordnet ist, dass der Befüllungskanal bei senkrecht gestellter Sitzlehne und bezogen auf die Fahrzeuglängsrichtung im Wesentlichen schräg nach vorne und oben verläuft, so dass sich der Gassack bei Aufblasen des Befüllungskanals schräg nach vorne und oben vor dem Sicherheitsgurt entfaltet.

Die Erfindung wird nachfolgend unter Bezugnahme auf die Figuren der Zeichnung anhand mehrerer Ausführungsbeispiele näher erläutert. Es zeigen:
- Fig. 1: schematisch eine Seitenansicht eines in einem Fahrzeugsitz sitzenden, mittels eines Sicherheitsgurtes gesicherten Fahrzeuginsassen sowie eines Seitengassacks zum Schutz des Thorax- und Kopfbereiches des Fahrzeuginsassen;
- Fig. 2: die Umrisse des flach ausgebreiteten Gassacks der Figur 1, wobei der Gassack im Vergleich zu der Figur 1 um die vertikale Achse gespiegelt dargestellt ist;
- Fig. 3A-3C: eine mögliche Entfaltungsreihenfolge des Gassacks der Figuren 1 und 2 im Auslösefall;
- Fig. 4A: ein erstes Ausführungsbeispiel eines Gassackdesigns, das einen Befüllungskanal zum Befüllen der Kopfkammer des Gassacks aufweist;
- Fig. 4B: das aufgeklappte Gassackdesign der Figur 4A;
- Fig. 4C: schematisch den Gassack der Figur 4A in Schnittansicht entlang der Linie A-A im ausgebreiteten, nicht aufgeblasen Zustand;
- Fig. 4D: schematisch den Gassack der Figur 4A in Schnittansicht entlang der Linie A-A im aufgeblasenen Zustand;
- Fig. 5A: ein zweites Ausführungsbeispiel eines Gassackdesigns, das einen Befüllungskanal zum Befüllen der Kopfkammer des Gassacks;
- Fig. 5B: das aufgeklappte Gassackdesign der Figur 5A;
- Fig. 5C: schematisch den Gassack der Figur 5A in Schnittansicht entlang der Linie B-B im ausgebreiteten, nicht aufgeblasen Zustand;
- Fig. 5D: schematisch den Gassack der Figur 5A in Schnittansicht entlang der Linie B-B im aufgeblasenen Zustand;
- Fig. 6A: den Gassack der Figur 5A, wobei der Gassack zum Zeitpunkt der Entfaltung dargestellt ist und dabei zwei Öffnungen zum Befüllen der oberen und der unteren Gassackkammer des Gassacks geöffnet sind;
- Fig. 6B: den Gassack der Fig. 5A zum Zeitpunkt des Rückhaltes, wobei die in der Figur 6A dargestellten Öffnungen zur Befüllung der oberen und der unteren Gassackkammer geschlossen sind und stattdessen ein Ausströmbereich zum Überströmen von Luft von der unteren Gassackammer in die obere Gassackkammer geöffnet ist; und
- Fig. 7: eine Ausgestaltung des Gassackmoduls der Figur 5A, wobei ein Gewebediffusor zum Verteilen des aus dem Gasgenerator ausströmenden Gases vorgesehen ist.

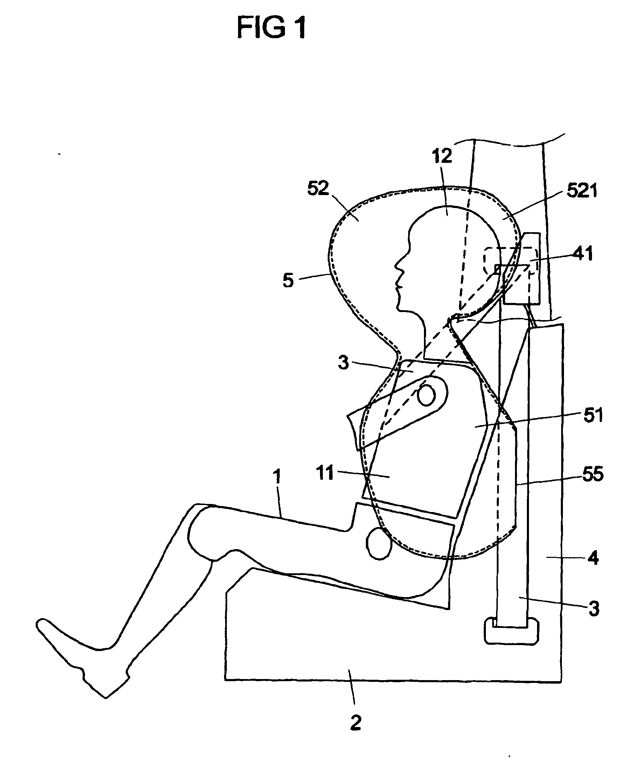

Die Figur 1 zeigt schematisch und in Seitendarstellung aus einer Ansicht, die vom Fahrzeugäußeren in das Fahrzeuginnere blickt, als Fahrzeuginsassen einen Fahrer 1 eines Fahrzeuges, der auf einem Kraftfahrzeugsitz 2 sitzt. Der Fahrzeuginsasse 1 ist durch einen Sicherheitsgurt 3 gesichert. Der Sicherheitsgurt 3 in ein üblicher Dreipunktgurt und läuft in an sich bekannter Weise von einem Gurtumlenker 41 an der B-Säule 4 des Kraftfahrzeuges entlang der Vorderseite des Fahrers 1 schräg von links oben nach rechts unten.

Es ist des Weiteren ein Gassack 5 im aufgeblasenen Zustand dargestellt. Der Gassack 5 ist in einem Randbereich 55, in dem auch der in der Figur 1 nicht dargestellte Gasgenerator angeordnet ist, an dem Fahrzeugsitz 2 befestigt. Beispielsweise befindet sich das Gassackmodul in einer Seitenwange des Fahrzeugsitzes 2. In entfaltetem Zustand erstreckt sich der Gassack 5 zwischen dem Fahrzeugsitz 2 und der Seitenstruktur des Fahrzeuges. Die nachfolgend verwendeten Bezeichnungen "nach vorne" oder "schräg nach vorne und oben" beziehen sich auf die Situation, dass das Airbagmodul in einer senkrecht ausgerichteten Rückenlehne angeordnet ist.

Der Gassack 5 bildet eine erste Kammer 51 aus, die zum Schutz des Thorax 11 des Fahrzeuginsassen ausgebildet ist und im Folgenden auch Thoraxkammer genannt wird. Des Weiteren bildet der Gassack 5 eine zweite Kammer 52 aus, die zum Schutz des Kopfes 12 des Fahrzeuginsassen ausgebildet ist und im Folgenden auch Kopfkammer genannt wird. Die Kopfkammer 52 besitzt eine nach hinten verlängerte Geometrie und weist hierzu einen Bereich 521 auf, der sich nach hinten, das heißt entgegen der Fahrtrichtung des Fahrzeuges erstreckt. Die Kopfkammer 52 weist dementsprechend eine ovale Form sowie eine Ausrichtung nach hinten auf.

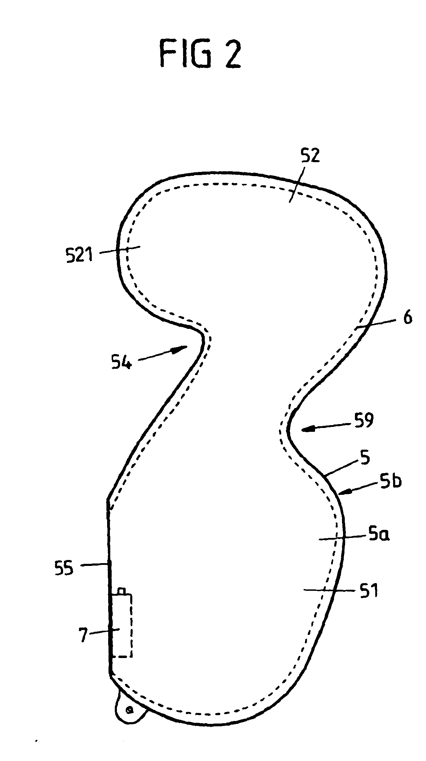

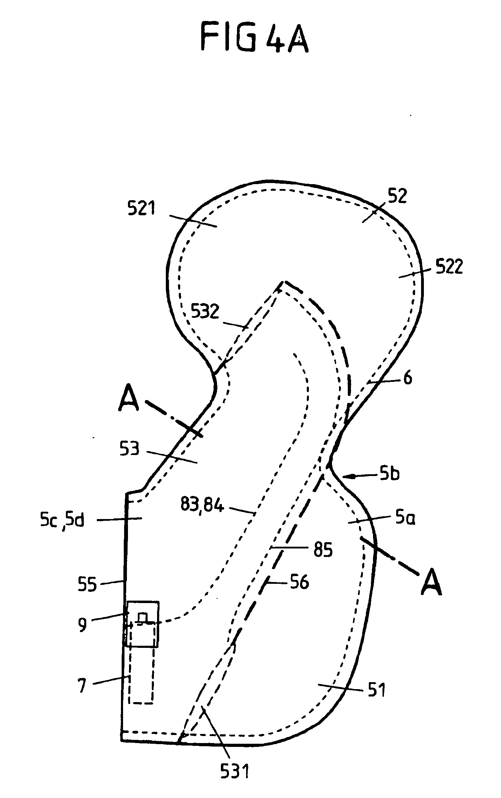

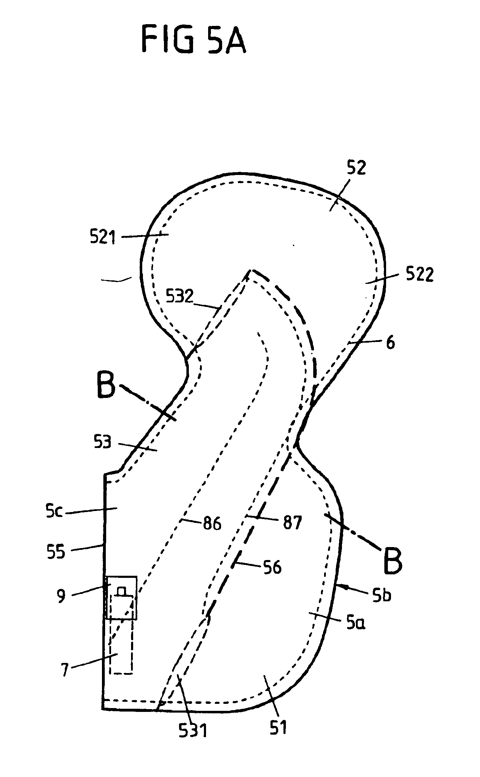

Die Figur 2 zeigt die Umrisslinie des flach ausgebreiteten Gassacks 5. Der Gassack 5 weist eine erste, dem Betrachter zugewandte Gewebelage 5a und eine zweite, dem Betrachter abgewandte Gewebelage 5b auf, die in ihrem Randbereich mittels einer Umfangsnaht 6 miteinander verbunden sind. Die beiden Gewebelagen 5a, 5b sind die äußeren Gewebelagen des Gassacks 5, die die Kopfkammer 52 und die Thoraxkammer 51 ausbilden. Weitere, innere Gewebelagen können ebenfalls vorgesehen sein und sind beispielhaft in den Ausführungsbeispielen der Figuren 4A-4D und 5A-5D dargestellt.

Des Weiteren ist im Bereich des unteren, seitlichen Rands 55 des Gassacks 5 ein Gasgenerator 7 im Gassack 5 angeordnet. Im dargestellten Ausführungsbeispiel ist der Gassack 5 durch Zusammenfalten eines symmetrischen Gassackzuschnitts entlang seiner Mittellinie bereitgestellt. Der Rand 55 des flach ausgebreiteten Gassacks wird daher durch eine Faltlinie des Gassacks gebildet. Es ist jedoch ebenfalls möglich, dass die obere Gewebelage 5a und die untere Gewebelage 5b durch gesonderte Gassackzuschnitte gebildet sind und dann durch Anbringen einer Umfangsnaht 6, die entlang des gesamten Umfanges geführt ist, miteinander verbunden werden. Im Sinne der vorliegenden Erfindung liegen eine obere und eine untere Gewebelage 5a, 5b sowohl vor, wenn die beiden Gewebelagen aus einem Zuschnitt durch Falten hergestellt sind, als auch, wenn die beiden Gewebelagen aus zwei getrennten Zuschnitten hergestellt sind.

Es wird darauf hingewiesen, dass der Gassack 5 in der Darstellung der Figur 2 und auch in der Darstellung der folgenden Figuren verglichen mit der Darstellung in der Figur 1 von der anderen Seite, das heißt mit einer Ansicht, die vom Fahrzeuginneren zum Fahrzeugäußeren gerichtet ist, dargestellt ist. Der hintere Bereich 521 der Kopfkammer 52 des Gassacks 5 ist dementsprechend in der Darstellung der Figur 2 links angeordnet.

In der Darstellung der Figur 2 ist des Weiteren gut zu erkennen, dass der Gassack 5 unterhalb der Kopfkammer 52 die geringste Breite und auch die geringste Ausdehnung nach hinten aufweist. So weist der Gassack 5 in seinem bezogen auf die Fahrzeuglängsrichtung hinteren Bereich eine Einbuchtung 54 aufweist. In dieser Einbuchtung verläuft der Sicherheitsgurt 3, vgl. Figur 1, so dass der Gassack 5 bei der Entfaltung durch den angelegten Sicherheitsgurt 3 nicht gestört wird. Zur Bereitstellung einer schmalen Kanals in diesem Bereich des Gassacks 5 weist der Gassack 5 auch in seinem bezogen auf die Fahrzeuglängsrichtung vorderen Bereich eine Einbuchtung 59 auf. Die vordere Einbuchtung 59 stellt eine obere Einschnürung der Thoraxkammer 51 bereit. Die Kopfkammer 52 und die Thoraxkammer 51 sind somit übereinander angeordnet und dabei durch zwei Einbuchtungen 54, 59 voneinander abgegrenzt, die zwischen sich einen Kanal bilden.

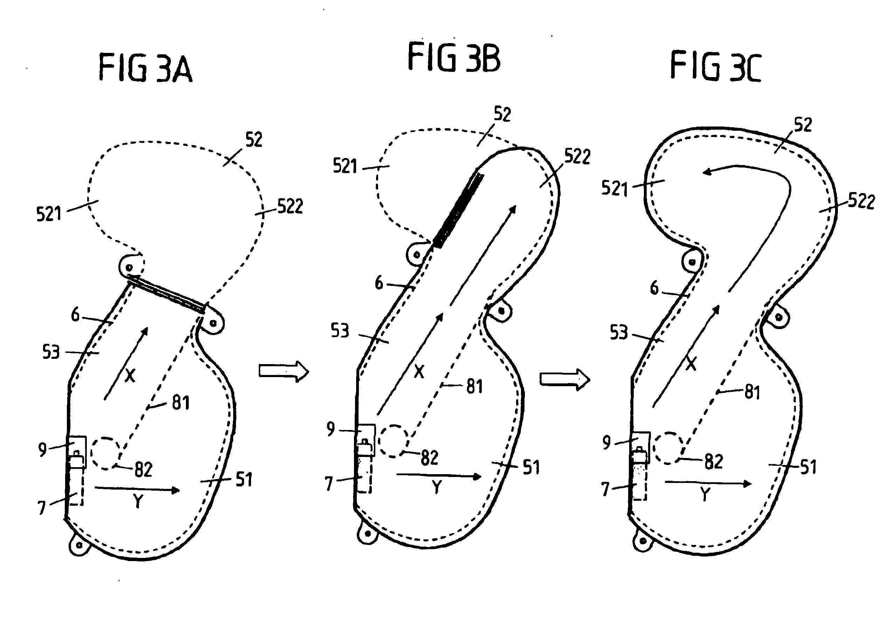

Die Figuren 3A, 3B und 3C zeigen ein Ausführungsbeispiel einer Entfaltungsreihenfolge des Gassacks 5 im Auslösefall. Hinsichtlich der Gassackstruktur ist zu bemerken, dass in der Darstellung der Figuren 3A bis 3C auch eine Naht 81 dargestellt ist, die eine Trennung des Gassacks in eine Kopfkammer 52 und eine Thoraxkammer 51 bereitstellt. Die Naht 81 endet in einem kreisförmigen Verbindungsbereich 82. Dabei wird darauf hingewiesen, dass weitere Nähte, ggf. in Verbindung mit nicht dargestellten inneren Gewebelagen vorgesehen sein können, wie beispielhaft anhand der Ausführungsbeispiele der Figuren 4A-4D und 5A-5D weiter unter erläutert werden wird.

Zwischen der Naht 81 und der gegenüberliegenden Umfangsnaht 6, die näherungsweise parallel verlaufen, ist ein Kanal 53 gebildet, der einen Befüllungskanal 53 des Gassacks 5 bildet. Der Befüllungskanal 53 erstreckt sich schräg nach oben und vorne. Als Kopfkammer 52 wird im Folgenden der Bereich des Gassacks 5 bezeichnet, der angrenzend an den Befüllungskanal 53 oberhalb der Einbuchtung 54 ausgebildet ist und von seinen Außenkonturen her den eigentlichen Kopfschutz für den Insassen bereitstellt.

Der als Rohrgasgenerator ausgebildete Gasgenerator 7 ist mit einem Gasstromverteiler 9 oder Diffuser in Form einer zylindrischen Hülse verbunden, wobei der Gasstromverteiler 9 auch in anderer Weise ausgebildet sein kann, beispielsweise als Gewebediffusor. Das aus Gasaustrittsöffnungen 71 des Rohrgasgenerators 7 austretende Gas wird von der Hülse 9 abgelenkt und in zwei Gasströme X, Y aufgeteilt. Der eine Gasstrom Y ist in die Thoraxkammer 51 gerichtet und dient zum Befüllen der Thoraxkammer 51 mit Gas. Der andere Gasstrom X ist in den Befüllungskanal 53 gerichtet und dient dem Befüllen der Kopfkammer 52 mit Gas.

Die in den Figuren 3A bis 3C lediglich schematisch dargestellte Faltung des Gassacks ist dabei derart, dass das gefaltete Paket der Kopfkammer zuerst gemäß den Figuren 3A und 3B sich diagonal nach vorne und nach oben entlang der Befüllungskammer 53 entfaltet. Die Entfaltung erfolgt dabei vor dem Gurtverlauf, vgl. Figur 1. Nachdem gemäß der Figur 3B der vordere Bereich 522 der Kopfkammer 52 durch den schräg nach oben und vorne gerichteten Gasstrom X aufgeblasen ist, und zwar ebenfalls in einer Richtung, die schräg nach oben und vorne gerichtet ist, entfaltet sich dann der nach hinten verlängerte Fortsatz 521 der Kopfkammer 52 im Wesentlichen in einer Richtung nach hinten, wie in der Figur 3C dargestellt ist. Der Gasstrom wird dabei im vorderen Bereich 522 der Kopfkammer 52 umgelenkt. Der nach hinten verlängerte Fortsatz 521 positioniert sich oberhalb des Gurtverlaufes vor dem Gurtumlenker 41 (vgl. Figur 1) bzw. an der anderen festen Struktur wie der B-Säule 4 im Abdeckbereich des Kopfes des Insassen.

Zum Bereitstellen der gewünschten Entfaltungsreihenfolge wird beispielsweise folgende Faltung des Gassacks 5 realisiert. Die Kopfkammer 52 wird vorne oder hinten umgeklappt, das heißt der hintere Bereich 521 wird auf den vorderen Bereich 522 umgeklappt oder umgekehrt. Das Umklappen kann entlang einer Faltlinie oder entlang mehrerer Faltlinien, beispielsweise zickzackförmig, erfolgen. Die Faltlinie oder die Faltlinien verlaufen dabei im Wesentlichen parallel zu der Entfaltungsrichtung X. Alternativ wird der hintere Bereich 521 in den vorderen Bereich 522 eingestülpt oder umgekehrt. Durch diesen ersten Faltvorgang wird die Breite der Kopfkammer 52 reduziert, und zwar im Wesentlichen auf die Breite des Gassacks im Bereich der Einbuchtung 54.

Der Gassack 5 wird nun nach außen oder nach innen bis etwa auf Höhe der Schulter gerollt, also etwa bis in die in der Figur 3A dargestellte Position. Es erfolgt anschließend eine Faltung der Thoraxkammer 5, beispielsweise als Zickzack-Faltung in Richtung des Gasgenerators 7. Der zuvor gerollte Bereich verläuft dabei entweder in Fahrzeuglängsrichtung und wird dann ebenfalls zickzackförmig gefaltet, oder er wird in Richtung des Sitzes oder alternativ in Richtung der Türverkleidung der angrenzenden Sitzseitenstruktur umgefaltet, so dass der zuvor gerollte Bereich parallel zum Gasgenerator liegt und in dieser Lage in die Zickzack-Faltung eingelagert wird.

Es wird darauf hingewiesen, dass die in den Figuren 3A bis 3C dargestellte Entfaltungsreihenfolge insofern lediglich beispielhaft zu verstehen ist, als die Entfaltung des vorderen und hinteren Bereich 521, 522 auch in anderer Weise erfolgen kann. Beispielsweise kann ebenso vorgesehen sein, dass zuerst der hintere Bereich 521 mit Gas gefüllt wird und anschließend der vordere Bereich 522. Dies ist unkritisch, da die Befüllung der Kopfkammer 52 in einer Position der Kopfkammer 52 erfolgt, die oberhalb des Gurtes liegt. Wichtig ist, dass des Gassack sich zunächst (bezogen auf den Teilgasstrom X) zunächst im Bereich der Befüllungskammer 53 schräg nach vorne und oben vor und oberhalb des am Körper des Insassen anliegenden Gurtes erstreckt.

Die Figuren 4A bis 4D zeigen ein erstes Ausführungsbeispiel eines erfindungsgemäßen Gassacks. Gemäß der Figur 4A umfasst der Gassack eine Thoraxkammer 51, eine Kopfkammer 52 sowie einen Befüllungskanal 53, wobei der Befüllungskanal sowohl eine Öffnung 531 zur Thoraxkammer 51 als auch eine Öffnung 532 zur Kopfkammer 52 ausbildet.

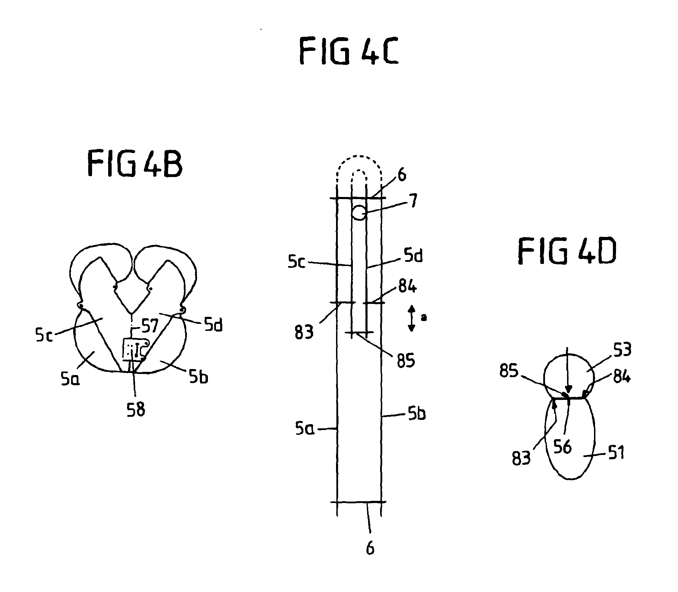

Der Befüllungskanal 53 ist durch zwei innere Gassacklagen 5c, 5d gebildet, die in der Schnittdarstellung der Figur 4C dargestellt sind. Die beiden äußeren Gewebelagen 5a, 5b sind umfangsseitig durch eine Naht 6 miteinander verbunden, wie bereits in Bezug auf die Figur 2 erläutert worden war. Die eine innere Gewebelage 5c ist nun über eine Naht 83 mit der einen äußeren Gewebelage 5a verbunden. Die andere innere Gewebelage 5d ist über eine weitere Naht 84, die beim flach ausgebreiteten Gassack deckungsgleich mit der Naht 83 ist, mit der anderen äußeren Gewebelage 5b verbunden. Des Weiteren sind die beiden inneren Gassacklagen 5c, 5d über eine Naht 85 miteinander verbunden, die im Abstand a zu den anderen Nähten 83, 84 ausgebildet ist.

Der Gasgenerator 7 sowie der dem Gasgenerator 7 zugeordnete Gasstromverteiler 9 sind zwischen den beiden inneren Gassacklagen 5c, 5d angeordnet, die in der Schnittdarstellung der Figur 4C schematisch dargestellt ist, so dass das Gas des Gasgenerators 7 im Auslösefall zunächst vollständig in den Befüllungskanal 53 eingeblasen wird.

In der Figur 4A sind des Weiteren die übereinanderliegenden Kanten 56 der inneren Gassacklagen 5c, 5d dargestellt, die von außen nicht sichtbar sind. Diese Kanten 56 stellen einen Überstand gegenüber der Naht 85 dar.

Die Figur 4B zeigt die einzelnen Gassacklagen 5a, 5b, 5c, 5d des Gassacks 5 im aufgeklappten Zustand. Es handelt sich um ein so genanntes Schmetterlings- oder "Butterfly"-Design, bei dem der Zuschnitt symmetrisch in Bezug auf eine Mittellinie 57 ausgebildet ist. Es sind die beiden äußeren Gewebelagen 5a, 5b sowie die beiden inneren Gewebelagen 5c, 5d dargestellt, die jeweils durch einen Zuschnitt gebildet sind. Weiter ist ein Gassackausschnitt 58 dargestellt, der der Anbringung und Befestigung des Gasgenerators 7 innerhalb des Gassackes 5 dient. Nach Zusammenfalten des Gassackzuschnitts entlang der Mittellinie 57 und Vernähen der einzelnen Gassacklagen, wie in Bezug auf die Figur 4C beschrieben, entsteht der beschriebene Gassack.

Es wird jedoch ebenso wie bei der Figur 2 darauf hingewiesen, dass die Ausgestaltung als Schmetterlings-Design nur beispielhaft zu verstehen ist. Es ist ebenfalls möglich, die einzelnen Gassacklagen 5a, 5b, 5c, 5d durch getrennte Zuschnitte zu bilden und diese durch Nähte entsprechend den Figur 4A und 4C zu verbinden, wobei die Außennaht 6 dann auch am unteren Rand 55 verlaufen würde (abgesehen von einer Zugangsöffnung für den Gasgenerator 7).

Die Figur 4D zeigt eine Schnittdarstellung des aufgeblasenen Gassacks 5 entlang der Linie A-A. Es ist zu erkennen, dass der zwischen den beiden inneren Gassacklagen 5c, 5d gebildete Raum durch das aus dem Gasgenerator 7 ausgetretene Gas aufgeblasen ist. Dieser Raum bildet den Befüllungskanal 53, über den Gas durch die Öffnung 532 in die Kopfkammer 52 und durch die Öffnung 531 in die Thoraxkammer 51 einströmen kann. Angrenzend erstreckt sich die Thoraxkammer 51. Der in der Figur 4D dargestellte Nippel stellt die Kanten 56 der inneren Gassacklagen 5c, 5d dar.

Es wird darauf hingewiesen, dass der Befüllungskanal 53 in einem Bereich 531, der in die Kopfkammer 52 hineinragt, derart bezogen auf die Fahrzeuglängsrichtung eine Krümmung nach hinten aufweist, so dass Gas mit einer nach hinten gerichteten Komponente in die Kopfkammer 52 eingeblasen wird. Somit wird der hintere Bereich 521 der Kopfkammer 51 zuerst mit Gas gefüllt. Unterhalb des Bereichs 531 erstreckt sich der Befüllungskanal 53 jedoch wie erläutert nach oben und vorne, so dass sich der Gassack bei Aufblasen des Befüllungskanals schräg nach vorne und oben vor dem Sicherheitsgurt entfaltet. Erst dann erfolgt ein Befüllen der Kopfkammer 52.

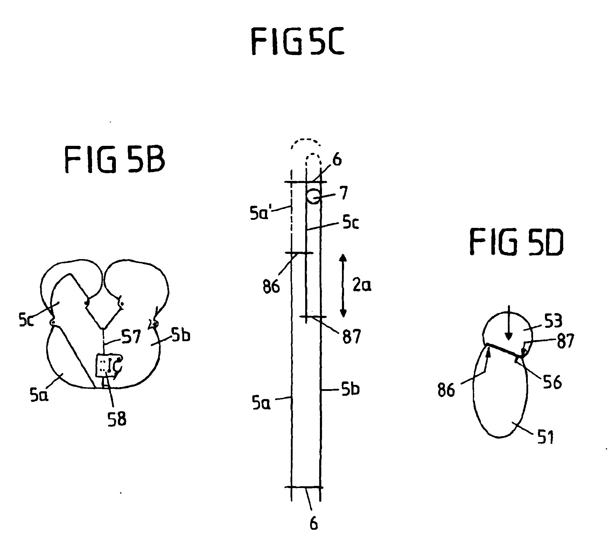

Die Figur 5A zeigt ein alternatives Ausführungsbeispiel, bei dem lediglich eine weitere, innere Gewebelage 5c zur Bereitstellung des Befüllungskanals 53 vorgesehen ist. Wie aus der Schnittdarstellung der Figur 5C ersichtlich ist, ist die zusätzliche Gebebelage 5c über eine erste Naht 86 mit der einen äußeren Gewebelage 5a und über eine zu der ersten Naht versetzte Naht 87 mit der zweiten äußeren Gassacklage 5b verbunden. Der Gasgenerator befindet sich in dem Bereich zwischen der inneren Gassacklage 5c und der äußeren Gassacklage 5b. Der Bereich 5a' der einen Gassacklage 5a, der sich zwischen der Naht 86 und der Umfangsnaht 6 erstreckt, ist dabei optional. Im einfachsten Fall, und zur größtmöglichen Materialreduzierung, wird auf den Bereich 51a verzichtet. Er kann jedoch auch bis zur Naht 6 fortgesetzt sein.

Da lediglich eine innere Gassacklage 5c vorgesehen ist, sind die Nähten 86, 87 im Abstand 2a zueinander beabstandet, das heißt mit dem Doppelten des Abstandes a zwischen den Nähten 83, 84 einerseits und 85 andererseits bei der Ausgestaltung der Figur 4C.

Aus der Figur 5B ist zu erkennen, das bei einem Butterfly-Design, das wie erwähnt lediglich beispielhaft ist, die eine Zusatzlage 5c nur auf einer der Hälften des symmetrischen Zuschnitts angeordnet ist, der die Außenlagen 5a, 5b bildet.

Die Figur 5D zeigt wiederum den aufgeblasenen Gassack. Der Befüllungskanal 53 wird bei diesem Ausführungsbeispiel durch die eine äußere Gassacklage 5b und die innere Gassacklage 5c gebildet. Aufgrund des Versatzes zwischen den Nähten 86, 87 ist der Verbindungsbereich 88, der auch als Fangband bezeichnet werden kann, schräg verlaufend. Die Kante 56 der inneren Gewebelage 89, die einen Überstand gegenüber der Naht 87 darstellt, ist wiederum schematisch dargestellt. Des Weiteren zeigt die Schnittdarstellung der Figur 5D die mit Gas gefüllte Thoraxkammer 51.

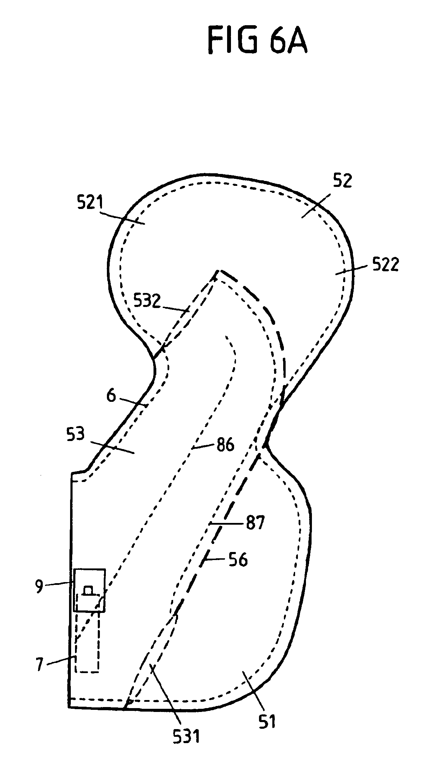

Die Figur 6A zeigt den Gassack der Figuren 5A bis 5D in der Entfaltungsphase. Über den Beströmungskanal 53 und die Öffnungen 531, 532 wird Gas in die Thoraxkammer 51 und in die Kopfkammer 52 eingefüllt. Der Gasdruck innerhalb der Befüllungskammer 53 ist dabei größer als der Gasdruck innerhalb der Thoraxkammer 51 und der Kopfkammer 52. Dementsprechend sind die Gasdurchgangsöffnungen 531, 532 geöffnet.

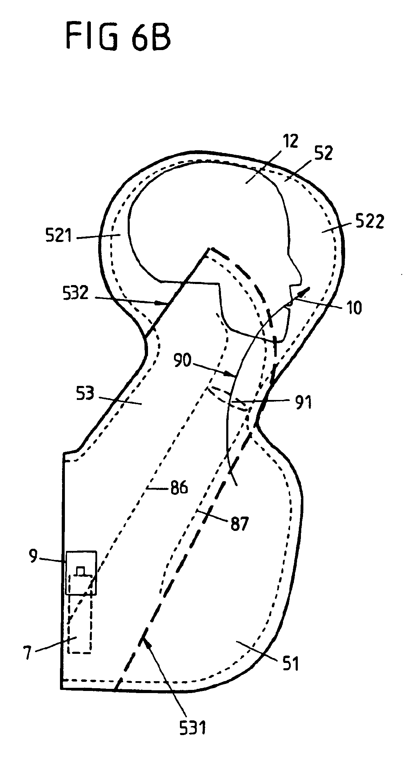

Die Figur 6B zeigt den Gassack und den Zustand der Öffnungen 531, 532 im Rückhaltefall. Dabei ist angenommen, dass der Fahrzeuginsasse mit seinem Thorax auf die Thoraxkammer 51 eine Kraft ausübt. Dies hat zur Folge, dass sich der Druck innerhalb der Thoraxkammer 51 erhöht. Der Druck in der Thoraxkammer 51 ist damit größer als der Druck im Befüllungskanal 53. Dies führt dazu, dass die Öffnung 531 geschlossen wird. Anhand der Figur 5A ist dieser Mechanismus verständlich: Die Thoraxkammer erstreckt sich bis zur Naht 86. Wenn der Druck in der Thoraxkammer 51 größer ist als in dem Befüllungskanal 53, wird der Bereich zwischen den beiden Nähten 86 und 87 zusammengedrückt. Die Öffnung 231 wird geschlossen.

Aufgrund des höheren Druckes auch in der Kopfkammer 52 im Vergleich zu dem Druck im Befüllungskanal 53 ist im Rückhaltefall auch die Öffnung 532 aus entsprechenden Gründen geschlossen.

Aufgrund des erhöhten Druckes in der Thoraxkammer 51 strömt des Weiteren Gas von der Thoraxkammer 51 direkt in die Kopfkammer 52, wobei das Gas zwischen den Gassacklagen 5a und 5c der Figur 5C in die Kopfkammer 52 strömt. Bei der Ausgestaltung der Figuren 4A bis 4D würde das Gas zwischen den inneren Gassacklagen 5c, 5d und jeweils angrenzend äußeren Gassacklagen 5a, 5b von der Thoraxkammer 51 in die Kopfkammer 52 strömen.

Der Grund für dieses Überströmen in die Kopfkammer 52 bei höherem Innendruck in der Thoraxkammer 51 liegt darin, dass aufgrund des in der Thoraxkammer 51 erhöhten Druckes der Befüllungskanal 53 zumindest teilweise zusammengepresst ist. Damit wird in dem Bereich 90 zwischen den Nähten 86, 87 eine schematisch dargestellte Öffnung 91 zwischen den Gassacklagen 5a und 5c zur Verbindung der Kammern 51, 52 freigegeben. Das Gas kann entsprechend dem Pfeil 10 von der Thoraxkammer 51 direkt in die Kopfkammer 52 strömen. Damit sind Mittel bereitgestellt, die ein Überströmen von Gas von der Thoraxkammer 51 in die Kopfkammer 52 bereitstellen, wenn der Druck in der Thoraxkammer 51 größer ist als der Druck im Befüllungskanal 53. Diese Mittel werden durch die Öffnung 91 realisiert, die in Abhängigkeit vom Innendruck in der Thoraxkammer 51 zusammengedrückt ist oder nicht, wobei sich der Ausströmquerschnitt entsprechend ändert.

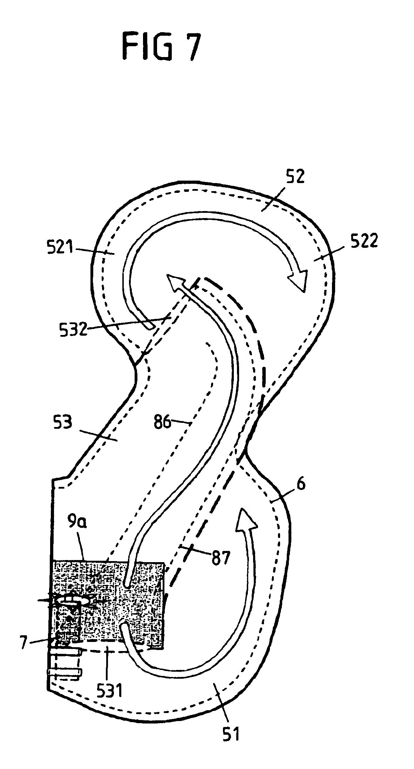

Die Figur 7 zeigt ein Ausführungsbeispiel, bei dem ein Gewebediffusor 9a als Gasstromverteiler vorgesehen ist, der aus einem zylindrischen Gewebeteil besteht. Der Gewebediffusor 9a umgibt den Gasgenerator 7. Ausströmendes Gas wird vom Gewebediffusor 9a zum einen nach oben in den Befüllungskanal 53 und weiter durch die Befüllungsöffnung 532 in die Kopfkammer 52 geleitet. Aufgrund der Einleitung des Gases von der Befüllungskammer 53 in die Kopfkammer 52 schräg nach hinten, die in Bezug auf die Figuren 4A bis 4D erläutert worden war, wird zunächst der hintere Bereich 521 der Kopfkammer 52 entfaltet, und anschließend, nach einer Umlenkung des Gases in der Kopfkammer 52, der vordere Bereich 522. Jedoch könnte auch eine umgekehrte Reihenfolge vorgesehen sein, wobei die Öffnung 532 des Befüllungskanals 53 für diesen Fall auf den vorderen Bereich 522 des Gassacks gerichtet wäre.

Des Weiteren wird über den Diffusor 9a und durch die Öffnung 531 Gas in die Thoraxkammer 51 geleitet.

Die Ausgestaltung der Figuren 6A bis 6B sowie der Figur 7 betraf das anhand der Figuren 5A bis 5D beschriebene Gassackdesign. Diese Ausgestaltungen können jedoch ebenfalls bei einem Gassackdesign entsprechend den Figuren 4A bis 4D realisiert werden, bei dem zwei innere Gassacklagen zur Bildung des Befüllungskanals 53 vorgesehen sind.

Die Erfindung beschränkt sich in ihrer Ausgestaltung nicht auf die vorstehend dargestellten Ausführungsbeispiele, die lediglich beispielhaft zu verstehen ist. Beispielsweise kann die Erfindung in entsprechender Weise auf der Beifahrerseite oder bei im Fond angeordneten Fahrzeugsitzen realisiert sein.

## Patentansprüche

1. Gassackmodul zum Schutz des Thorax- und Kopfbereichs eines in einem Fahrzeugsitz sitzenden, mittels eines Sicherheitsgurtes (3) gesicherten Fahrzeuginsassen (1), das aufweist:
- einen Gassack (5) mit einer ersten und einer zweiten äußeren Gassacklage (5a, 5b), der mindestens eine erste aufblasbare Kammer (51), die zum Schutz des Thorax des Fahrzeuginsassen ausgebildet ist (Thoraxkammer), und eine zweite aufblasbare Kammer (52), die zum Schutz des Kopfes des Fahrzeuginsassen ausgebildet ist (Kopfkammer), umfasst, und
- einen Gasgenerator (7) zum Aufblasen des Gassacks (5),
- wobei sich der Gassack (5) im Auslösefall derart entfaltet, dass der Gassack (5) bezogen auf die Fahrzeuglängsrichtung sich schräg nach vorne und oben vor dem Sicherheitsgurt (3) und anschließend oberhalb des Sicherheitsgurtes (3) entfaltet,
**gekennzeichnet durch**
einen im Gassack (5) ausgebildeten Befüllungskanal (53), in den das aus dem Gasgenerator (7) im Auslösefall austretende Gas zumindest teilweise eintritt, wobei
- der Befüllungskanal (53) **durch** zwei Gassacklagen (5c, 5d; 5c, 5b) gebildet ist, von denen mindestens eine eine weitere, innenliegende dritte Gassacklage (5c) ist, und
- der Befüllungskanal (53) im Wesentlichen schräg nach vorne und oben verläuft, so dass sich der Gassack (3) bei Aufblasen des Befüllungskanals (53) schräg nach vorne und oben vor dem Sicherheitsgurt (3) entfaltet, und wobei entweder
- der Befüllungskanal (53) **durch** die dritte, innenliegende Gassacklage (5c) und eine der äußeren Gassacklagen (5b) gebildet ist, wobei die dritte Gassacklage (5c) über eine erste Naht (86) mit der einen äußeren Gassacklage (5a) und eine zu der ersten Naht (86) beabstandete zweite Naht (87) mit der anderen äußeren Gassacklage (5b) verbunden ist,
oder
- der Befüllungskanal (53) **durch** die dritte, innenliegende Gassacklage (5c) und eine weitere innenliegend, vierte Gassacklage (5d) gebildet ist, wobei die dritte Gassacklage (5c) über eine erste Naht (85) mit der vierten Gassacklage (5d), die dritte Gassacklage (5c) über eine zweite Naht (83) mit der einen äußeren Gassacklage (5a) und die vierte Gassacklage (5d) über eine dritte Naht (84) mit der anderen äußeren Gassacklage (5b) verbunden sind, wobei die erste Naht (85) beabstandet zu der zweiten und dritten Naht (83, 84) ist.

2. Gassackmodul nach Anspruch 1, **dadurch gekennzeichnet, dass** der Befüllungskanal (53) über eine erste Öffnung (531) mit der Thoraxkammer (51) verbunden ist.

3. Gassackmodul nach Anspruch 1 oder 2, **dadurch gekennzeichnet, dass** der Befüllungskanal (53) über eine zweite Öffnung (532) mit der Kopfkammer (52) verbunden ist.

4. Gassackmodul nach Anspruch 2 oder Anspruch 3, **dadurch gekennzeichnet, dass** die Öffnung (531, 532) als Rückschlagventil ausgebildet ist, die sich schließt, wenn der Druck in der jeweiligen Gassackkammer (51, 52) größer ist als der Druck im Befüllungskanal (53).

5. Gassackmodul nach Anspruch 1, wobei der Befüllungskanal (53) durch die dritte, innenliegende Gassacklage (5c) und eine weitere innenliegende, vierte Gassacklage (5d) gebildet ist, **dadurch gekennzeichnet, dass** die zweite Naht (83) und die dritte Naht (84) derart ausgebildet sind, dass sie beim flach ausgebreiteten Gassack übereinander liegen.

6. Gassackmodul nach einem der vorangehenden Ansprüche, **dadurch gekennzeichnet, dass** der Befüllungskanal (53) derart ausgebildet ist, dass beim Aufblasen des Gassacks das Gas aus dem Befüllungskanal (53) in einer Richtung im wesentlichen schräg nach hinten und oben in die Kopfkammer (52) eintritt, wobei der Befüllungskanal (53) im aufgeblasenen Gassack angrenzend an die Kopfkammer (52) bezogen auf die Fahrzeuglängsrichtung nach hinten gekrümmt ist, so dass Gas mit einer nach hinten gerichteten Komponente in die Kopfkammer (52) eingeblasen wird.

7. Gassackmodul nach einem der vorangehenden Ansprüche, **dadurch gekennzeichnet, dass** Mittel (91) vorgesehen sind, die ein Überströmen von Gas von der Thoraxkammer (51) in die Kopfkammer (52) bereitstellen, wenn der Druck in der Thoraxkammer (51) größer ist als der Druck im Befüllungskanal (53).

8. Gassackmodul nach Anspruch 7, **dadurch gekennzeichnet, dass** die Mittel durch mindestens eine Ausströmöffnung (91) gebildet sind, die die Thoraxkammer (51) und die Kopfkammer (52) verbindet, wobei die Ausströmöffnung (91) zwischen dem Befüllungskanal (53) und einer der äußeren Gassacklagen (5a, 5b) verläuft und zusammengedrückt ist, wenn der Druck in der Thoraxkammer (51) kleiner ist als der Druck im Befüllungskanal (53).

9. Gassackmodul nach einem der vorangehenden Ansprüche, **dadurch gekennzeichnet, dass** der Gassack (5) unterhalb der Kopfkammer (52) und dabei in dem Bereich, in dem der Befüllungskanal (53) im Wesentlichen schräg nach oben und vorne verläuft, die geringste Ausdehnung nach hinten aufweist.

10. Gassackmodul nach einem der vorangehenden Ansprüche, **dadurch gekennzeichnet, dass** die aufgeblasene Kopfkammer (52) des Gassacks (5) in der Seitenansicht eine ovale Form aufweist.

11. Fahrzeugsitz mit einem Gassackmodul gemäß Anspruch 1, wobei der Gassack derart ausgebildet und in einer Sitzlehne des Fahrzeugsitzes angeordnet ist, dass der Befüllungskanal (53) bei senkrecht gestellter Sitzlehne und bezogen auf die Fahrzeuglängsrichtung im Wesentlichen schräg nach vorne und oben verläuft, so dass sich der Gassack (3) bei Aufblasen des Befüllungskanals (53) schräg nach vorne und oben vor dem Sicherheitsgurt (3) entfaltet.

## Claims

1. Air bag module for protecting the thorax and head area of a vehicle occupant (1) who is sitting in a vehicle seat and is secured by means of a safety belt (3), having:
- an air bag (5) which has a first and a second outer air bag layer (5a, 5b) and comprises at least one first inflatable chamber (51), designed to protect the thorax of the vehicle occupant (thorax chamber), and a second inflatable chamber (52), designed to protect the head of the vehicle occupant (head chamber), and
- a gas generator (7) for inflating the air bag (5)
- wherein the air bag (5), in the event of deployment, unfolds in such a way that the air bag (5), in relation to the vehicle longitudinal direction, unfolds diagonally forwards and upwards in front of the safety belt (3) and subsequently above the safety belt (3),
**characterized by**
a filling channel (53), formed in the air bag (5), into which the gas, leaving the gas generator (7) in the event of deployment, enters at least partially, wherein
- the filling channel (53) is formed by two air bag layers (5c, 5d; 5c, 5b), at least one of which is a further, internal third air bag layer (5c), and
- the filling channel (53) essentially runs diagonally forwards and upwards so that the air bag (3), upon inflating the filling channel (53), unfolds diagonally forwards and upwards in front of the safety belt (3), and wherein either
- the filling channel (53) is formed by the third internal air bag layer (5c) and one of the outer air bag layers (5b), wherein the third air bag layer (5c) is connected via a first seam (86) to the one outer air bag layer (5a) and via a second seam (87), spaced apart from the first seam (86), to the other outer air bag layer (5b),
or
- the filling channel (53) is formed by the third internal air bag layer (5c) and a further internal forth air bag layer (5d), wherein the third air bag layer (5c) is connected via a first seam (85) to the forth air bag layer (5d), the third air bag layer (5c) is connected via a second seam (83) to the one outer air bag layer (5a) and the forth air bag layer (5d) is connected via a third seam (84) to the other outer air bag layer (5b), wherein the first seam (85) is spaced apart from the second and third seam (83, 84).

2. Air bag module according to Claim 1, **characterized in that** the filling channel (53) is connected via a first opening (531) to the thorax chamber (51).

3. Air bag module according to Claim 1 or 2, **characterized in that** the filling channel (53) is connected via a second opening (532) to the head chamber (52).

4. Air bag module according to Claim 2 or Claim 3, **characterized in that** the opening (531, 532) is designed as check valve, which closes when the pressure in the respective air bag chamber (51, 52) is greater than the pressure in the filling channel (53).

5. Air bag module according to Claim 1, wherein the filling channel (53) is formed by the third internal air bag layer (5c) and a further internal forth air bag layer (5d), **characterized in that** the second seam (83) and the third seam (84) are designed in such a way that they lie one upon the other when the air bag is spread out flat.

6. Air bag module according to any of the preceding claims, **characterized in that** the filling channel (53) is designed in such a way that upon inflating the air bag the gas from the filling channel (53) enters into the head chamber (52) in a direction essentially diagonally backwards and upwards, wherein the filling channel (53) in the inflated air bag is, adjacent to the head chamber (52), curved backwards in relation to the vehicle longitudinal direction, so that gas is blown into the head chamber (52) with a component that is directed backwards.

7. Air bag module according to any of the preceding claims, **characterized in that** means (91) are provided, which provide for an overflow of gas from the thorax chamber (51) into the head chamber (52), when the pressure in the thorax chamber (51) is greater than the pressure in the filling channel (53).

8. Air bag module according to Claim 7, **characterized in that** the means are formed by at least one outflow opening (91), which connects the thorax chamber (51) and the head chamber (52), wherein the outflow opening (91) runs between the filling channel (53) and one of the outer air bag layers (5a, 5b) and is compressed, when the pressure in the thorax chamber (51) is smaller than the pressure in the filling channel (53).

9. Air bag module according to any of the preceding claims, **characterized in that** the air bag (5) has its smallest extension backwards underneath the head chamber (52), and thereby **in that** area, in which the filling channel (53) essentially runs diagonally upwards and forwards.

10. Air bag module according to any of the preceding claims, **characterized in that** the inflated head chamber (52) of the air bag (5) has an oval shape in side view.

11. Vehicle seat having an air bag module according to Claim 1, wherein the air bag is designed and arranged in a seat back of the vehicle seat in such a way that the filling channel (53), with the seat back positioned vertically and in relation to the vehicle longitudinal direction, essentially runs diagonally forwards and upwards, so that the air bag (3), upon inflating the filling channel (53), unfolds diagonally forwards and upwards in front of the safety belt (3).

## Revendications

1. Module de coussin gonflable pour la protection de la région du thorax et de la tête d'un occupant de véhicule (1) assis dans un siège de véhicule, sécurisé à l'aide d'une ceinture de sécurité (3), qui présente :
- un coussin gonflable (5) avec une première et une seconde couches de coussin gonflable extérieures (5a, 5b), qui comprend au moins une première chambre gonflable (51) réalisée pour la protection du thorax de l'occupant de véhicule (chambre pour le thorax) et une seconde chambre gonflable (52) réalisée pour la protection de la tête de l'occupant de véhicule (chambre pour la tête), et
- un générateur de gaz (7) pour le gonflage du coussin gonflable (5),
- le coussin gonflable (5) se déployant en cas de déclenchement de manière à se déployer en biais vers l'avant et le haut par rapport au sens longitudinal du véhicule devant la ceinture de sécurité (3) puis au-dessus de la ceinture de sécurité (3), **caractérisé par**
un canal de remplissage (53) réalisé dans le coussin gonflable (5), dans lequel entre au moins en partie le gaz sortant du générateur de gaz (7) en cas de déclenchement,
- le canal de remplissage (53) étant formé par deux couches de coussin gonflable (5c, 5d ; 5c, 5b), dont au moins une est une autre troisième couche de coussin gonflable (5c) intérieure, et
- le canal de remplissage (53) s'étendant sensiblement en biais vers l'avant et le haut de sorte que le coussin gonflable (3) se déploie en biais vers l'avant et le haut lors du gonflage du canal de remplissage (53) devant la ceinture de sécurité (3), et dans lequel soit
- le canal de remplissage (53) est formé par la troisième couche de coussin gonflable (5c) intérieure et l'une des couches de coussin gonflable extérieures (5b), la troisième couche de coussin gonflable (5c) étant reliée par une première couture (86) à la une couche de coussin gonflable (5a) extérieure et par une deuxième couture (87) espacée de la première couture (86) à l'autre couche de coussin gonflable extérieure (5b),
soit
- le canal de remplissage (53) est formé par la troisième couche de coussin gonflable (5c) intérieure et une autre quatrième couche de coussin gonflable (5d) intérieure, la troisième couche de coussin gonflable (5c) étant reliée par une première couture (85) à la quatrième couche de coussin gonflable (5d), la troisième couche de coussin gonflable (5c) étant reliée par une deuxième couture (83) à la une couche de coussin gonflable extérieure (5a) et la quatrième couche de coussin gonflable (5d) étant reliée par une troisième couture (84) à l'autre couche de coussin gonflable extérieure (5b), la première couture (85) étant espacée des deuxième et troisième coutures (83, 84).

2. Module de coussin gonflable selon la revendication 1, **caractérisé en ce que** le canal de remplissage (53) est relié par une première ouverture (531) à la chambre pour le thorax (51).

3. Module de coussin gonflable selon la revendication 1 ou 2, **caractérisé en ce que** le canal de remplissage (53) est relié par une seconde ouverture (532) à la chambre pour la tête (52).

4. Module de coussin gonflable selon la revendication 2 ou 3, **caractérisé en ce que** l'ouverture (531, 532) est réalisée comme un clapet antiretour qui se ferme si la pression dans la chambre de coussin gonflable respective (51, 52) est supérieure à la pression dans le canal de remplissage (53).

5. Module de coussin gonflable selon la revendication 1, dans lequel le canal de remplissage (53) est formé par la troisième couche de coussin gonflable (5c) intérieure et une autre quatrième couche de coussin gonflable (5d) intérieure, **caractérisé en ce que** la deuxième couture (83) et la troisième couture (84) sont réalisées de manière à reposer l'une sur l'autre lorsque le coussin gonflable est déployé à plat.

6. Module de coussin gonflable selon l'une quelconque des revendications précédentes, **caractérisé en ce que** le canal de remplissage (53) est réalisé de telle manière que lors du gonflage du coussin gonflable, le gaz sortant du canal de remplissage (53) entre dans la chambre pour la tête (52) dans une direction sensiblement en biais vers l'arrière et le haut, le canal de remplissage (53) étant courbé vers l'arrière à l'état gonflé du coussin gonflable de manière contigüe à la chambre pour la tête (52) par rapport au sens longitudinal du véhicule de sorte que le gaz soit insufflé avec une composante dirigée vers l'arrière dans la chambre pour la tête (52).

7. Module de coussin gonflable selon l'une quelconque des revendications précédentes, **caractérisé en ce que** des moyens (91) sont prévus, lesquels permettent un déversement du gaz de la chambre pour le thorax (51) dans la chambre pour la tête (52) lorsque la pression dans la chambre pour le thorax (51) est supérieure à la pression dans le canal de remplissage (53).

8. Module de coussin gonflable selon la revendication 7, **caractérisé en ce que** les moyens sont constitués par au moins une ouverture de sortie (91) qui relie la chambre pour le thorax (51) et la chambre pour la tête (52), l'ouverture de sortie (91) s'étendant et étant comprimée entre le canal de remplissage (53) et l'une des couches de coussin gonflable (5a, 5b) extérieures lorsque la pression dans la chambre pour le thorax (51) est inférieure à la pression dans le canal de remplissage (53).

9. Module de coussin gonflable selon l'une quelconque des revendications précédentes, **caractérisé en ce que** le coussin gonflable (5) présente sous la chambre pour la tête (52) et dans la zone dans laquelle le canal de remplissage (53) s'étend sensiblement en biais vers le haut et l'avant, l'expansion la plus faible vers l'arrière.

10. Module de coussin gonflable selon l'une quelconque des revendications précédentes, **caractérisé en ce que** la chambre pour la tête gonflée (52) du coussin gonflable (5) présente une forme ovale en vue de côté.

11. Siège de véhicule avec un module de coussin gonflable selon la revendication 1, dans lequel le sac gonflable est réalisé et disposé dans un dossier du siège de véhicule de telle manière que le canal de remplissage (53) s'étende sensiblement en biais vers l'avant et le haut par rapport au sens longitudinal de véhicule en cas de dossier placé verticalement, de sorte que le coussin gonflable (3) se déploie lors du gonflage du canal de remplissage (53) en biais vers l'avant et le haut devant la ceinture de sécurité (3).
